# EUROPÄISCHE PATENTSCHRIFT

(11) **EP 3 768 451 B1**
(45) Veröffentlichungstag und Bekanntmachung des Hinweises auf die Patenterteilung: **30.04.2025**
(21) Anmeldenummer: 19723642.5
(22) Anmeldetag: 30.04.2019
(51) Int. Cl.: B23B 51/00

(54) **BOHRWERKZEUG**
DRILLING TOOL
OUTIL DE PERÇAGE

(30) Priorität: 08.06.2018 DE 202018103219 U
(43) Veröffentlichungstag der Anmeldung: 27.01.2021
(73) Patentinhaber: ZCC Cutting Tools Europe GmbH, 40472 Düsseldorf (DE)
(72) Erfinder: AGUSTIN-PAYA, Jose, 45478 Mülheim an der Ruhr (DE); ZHAO, Quanliang, 40625 Düsseldorf (DE)
(74) Vertreter: RGTH
(86) Internationale Anmeldenummer: PCT/DE2019/100386
(87) Internationale Veröffentlichungsnummer: WO 2019/233509

(56) Entgegenhaltungen:
- EP-A2- 3 006 146
- WO-A1-2012/017645
- DE-A1- 102012 012 479
- DE-A1- 3 339 211
- JP-A- 2017 024 168
- US-A- 3 592 555

## Beschreibung

Die Erfindung betrifft ein Bohrwerkzeug, insbesondere einen Spiralbohrer für metallische Werkstoffe, Kunststoffe oder Komposit-Werkstoffe (Verbundwerkstoffe), mit einem Schaft und einer Bohrkrone, die an ihrer Stirnseite mindestens zwei Hauptschneiden (vorzugsweise drei oder mehr Hauptschneiden) aufweist, die durch jeweils aneinandergrenzende Span- und Freiflächen gebildet werden, wobei sich eine der Hauptschneiden zumindest bis zur Bohrerlängsachse erstreckt, und mit gerade oder wendelförmig verlaufenden Spannuten.

Spiralbohrer der genannten Art werden insbesondere zum Bohren ins Volle verwendet. Ein derartiges Bohrwerkzeug gemäß dem Oberbegriff des Anspruchs 1 ist aus dem Dokument DE 33 39 211 A bekannt.

Die nach dem Stand der Technik ursprünglich verwendeten Spiralbohrer besitzen eine keilförmige Bohrerspitze mit zwei oder mehr Hauptschneiden und wendelförmig am Mantelbereich des Bohrwerkzeugs verlaufende Nebenschneiden, zwischen denen Spannuten angeordnet sind. An diesem die Haupt- und Nebenschneiden aufweisenden Bohrerteil schließt sich ein zylinderförmiger Schaft als Einspannende an. Bei Spiralbohrern mit keilförmigem Bohrkopf beträgt der durch die Hauptschneiden gebildete Keilwinkel 118° bis 130°. Je nach Material werden Spiralbohrer mit unterschiedlichen Seitenspanwinkeln verwendet.

Um eine Sacklochbohrung mit einem ebenen planen Lochboden herzustellen zu können, wird in der EP 1 748 859 B1 ein Bohrer vorgeschlagen, bei dem die zwei Hauptschneiden der Bohrerstirn eine gemeinsame durchgehende Schneide bilden, die in einer Ebene senkrecht zur Bohrerlängsachse verläuft. Die beiden Hauptschneiden sind somit unter einem Winkel von 180° zueinander orientiert. Ein solcher Bohrer weist keine vorgelagerte Spitze auf, so dass der Bohrlochgrund vollständig eben und plan ist. Die aus den Hauptschneiden gebildete Schneide soll sich über den gesamten Bohrerdurchmesser erstrecken und eine bezüglich der Bohrermitte punktsymmetrische Anordnung bilden.

Bohrer mit einer keilförmigen Bohrerspitze haben jedoch den Nachteil, dass insbesondere bei großen Bohrdurchmessern zunächst eine Pilotbohrung mit einem schmalen Bohrdurchmesser gefertigt werden muss, wobei die Pilotbohrung die Zentrierung der Bohrer-Keilspitze bestimmt.

Bohrer mit einer Hauptschneide, die linear quer zur Bohrerlängsachse verläuft, lassen praktisch keine sichere Zentrierung zu. Bei handgeführten Bohrern oder solchen Bohrern, bei denen das Werkstück relativ zur Bohrerhalterung nicht einspannbar ist, ist eine ortsgenaue Anbringung des Bohrlochs kaum möglich.

Es ist daher Aufgabe der vorliegenden Erfindung, diesen Nachteil zu beseitigen und ein Bohrwerkzeug anzugeben, das konstruktionsbedingt eine sichere Zentrierung ermöglicht.

Diese Aufgabe wird durch ein Bohrwerkzeug nach Anspruch 1 gelöst, das dadurch gekennzeichnet ist, dass die Hauptschneiden einen außerhalb der Bohrerlängsachse liegenden äußeren, in Bohrfortschrittsrichtung gesehenen vorspringenden Schneidpunkt besitzen, von dem aus die Schneiden zur Bohrerlängsachse hin abfallen und dass sich jeweils an den radial äußersten vorspringenden Schneidpunkt der Hauptschneiden eine Schleppschneide anschließt, die gegenüber der parallel zur Bohrerlängsachse liegenden übrigen Mantelfläche um mindestens 10° geneigt verläuft und die eine längsaxiale Erstreckung zwischen 1,5 mm und 5 mm besitzt.

Die Kombination dieser Maßnahmen dient zu einer sicheren Zentrierung. Der radial äußerste Punkt der Hauptschneiden beziehungsweise der Hauptschneide bestimmt bei einer Rotation des eingespannten Bohrwerkzeugs ein Kreis mit einem Radius, der entweder den späteren Bohrlochdurchmesser oder nahezu den späteren Bohrlochdurchmesser entspricht. Anders als bei einem Bohrerkopf mit einer keilförmigen Bohrerspitze wird somit die lokale Fixierung des Bohrers beim Zerspanen sichergestellt. Die zur Bohrerlängsmitte hin nach "hinten" geneigten Hauptschneiden bewirken beim Zerspanen Schnittkräfte, die ein seitliches Ausweichen des Bohrers beim Anbohren wirksam verhindern. Entsprechendes, gegebenenfalls Unterstützendes liefern die sich radial nach außen anschließenden Schleppschneiden, die um einen Winkel von mindestens 10° geneigt sind.

Weiterbildungen der Erfindung sind in den Unteransprüchen beschrieben. So kann jede der Hauptschneiden, vorzugsweise jede der drei Hauptschneiden in einer Querschnittsansicht betrachtet linear, konvex oder konkav ausgebildet sein, vorzugsweise dergestalt, dass die lineare Hauptschneide oder eine Verbindungslinie der Endpunkte der konvexen oder konkaven Hauptschneide unter einem Winkel zwischen 3° und 20° zu einer senkrecht zur Bohrerlängsmittelachse liegende Querebene geneigt ist. Ein optimaler Winkel liegt bei 10° ± 3°, weil hierbei ein idealer Kompromiss zwischen einer Bohrerzentrierung und einem schnellen Bohrfortschritt getroffen wird.

Um Kantenausbrüche zwischen der Schleppschneide und der Hauptschneide zu verhindern, befindet sich zwischen den beiden Schneiden eine Fase, die vorzugsweise unter einem Winkel zwischen 40° und 50°, zum Beispiel 45° angeordnet ist.

Nach einer weiteren bevorzugten Ausbildung schließt sich an die Schleppschneide eine weitere Schneide mit einem konvex gekrümmten Verlauf an, vorzugsweise unter einem Krümmungsradius R zwischen 1 mm und 1,5 mm. Ein solch gekrümmter Verlauf der (verlängerten) Schleppschneide dient insbesondere zur Glättung der Bohrwandung.

Nach einer weiteren Ausgestaltung kann zwischen der Bohrkrone und dem Schaft zum Einspannen des Bohrwerkzeugs eine weitere Schneide zum Schneiden einer Fase vorgesehen sein, vorzugsweise unter einem Winkel von 45°. Eine solche Fase verhindert eine scharfe obere Kante der Bohrungswand und dient gegebenenfalls zum Einführen von stiftförmigen Werkzeugteilen als im Prinzip nach dem Stand der Technik bekannte Zentrierhilfe.

Wie bereits erwähnt, wird eine Hauptschneide durch eine Spanfläche und eine Freifläche gebildet, die aneinandergrenzen. Vorzugsweise, um einen sogenannten "ziehenden Schnitt" zu ermöglichen, ist der Spanwinkel der Spanfläche negativ.

Um den Spanbruch zu verbessern und damit die Spanabfuhr über die wendelförmigen Spanformmulden zu erleichtern, sind nach einer weiteren Ausgestaltung der Erfindung in den Spanflächen der Hauptschneiden Spanformelemente vorgesehen, die als Spanformmulde und/oder Spanformerhebung, insbesondere Rippen ausgebildet sind. Durch Spanformmulden erfährt der von der Schneidkante aus ablaufende Span eine Krümmung, die aufgrund der Spanformmulde selbst oder durch in der Spanformmulde angeordnete Rippen zu einem frühen Spanbruch führt.

Nach einer weiteren Ausbildung der Erfindung können die Hauptschneiden zusätzliche Einkerbungen, vorzugsweise nutenförmige Ausnehmungen aufweisen, die insbesondere von Hauptschneide zur Hauptschneide in unterschiedlichem axialen Abstand angeordnet sind, so dass die Nuten bei Drehung des Bohrwerkzeugs unterschiedliche Schneidbahnen durchlaufen. Durch diese Maßnahme wird die Schnittleistung, das heißt der Bohrfortschritt erheblich verbessert.

Je nach Anwendungszweck wird der einstückige Bohrerkörper aus einem Hartmetall oder einem Schnellarbeitsstahl gefertigt.

Um die Schnittleistung im Bereich der Bohrerlängsachse zu verbessern, ist eine der verwendeten Hauptschneiden länger als die andere beziehungsweise übrigen Hauptschneiden ausgebildet, das heißt, dass eine der Hauptschneiden durch die Bohrerlängsmittelachse hindurchläuft und somit einen auf die Bohrerachse bezogen überschießenden Abschnitt besitzt, wohingegen die andere Hauptschneide beziehungsweise die anderen Hauptschneiden vor der Bohrerlängsmittelachse enden.

Weitere Details der Erfindung sowie bevorzugte Ausbildungen werden im Folgenden anhand der Zeichnungen erläutert. Es zeigen jeweils in Form einer Prinzipskizze:
- Fig. 1: eine vereinfachte Seitenansicht eines Bohrwerkzeugs,
- Fig. 2: eine Detailansicht "X" nach Fig. 1,
- Fig. 3 bis 12: unterschiedliche Prinzipskizzen verschiedener Ausgestaltungen.

Vorausgeschickt werden soll, dass Bohrwerkzeuge mit einem Einsteckschaft sowie einem Bohrerteil mit eingearbeiteten wendelförmigen oder auch linear verlaufenden Spanformnuten grundsätzlich bekannt sind. Die Spankammern sowie Stege zwischen den Spankammern sind in den Zeichnungen fortgelassen.

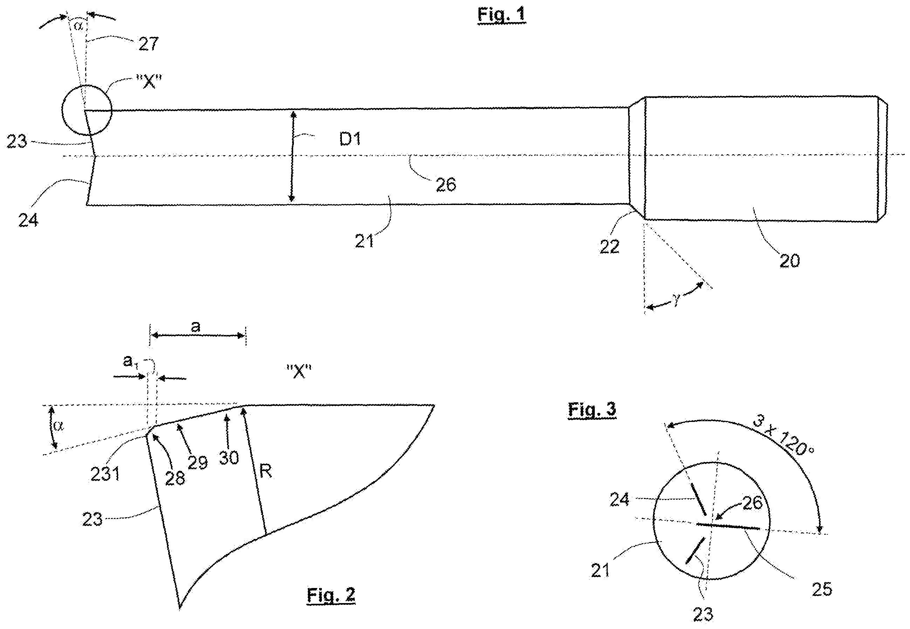

Der erfindungsgemäße Bohrer besitzt in der in Fig. 1 dargestellten Version einen zylinderförmigen Einspannschaft 20 sowie einen mit den genannten Spannuten und dem Bohrerkopf ausgebildeten Schaftteil 21. Zwischen dem Einspannschaft 20 und dem Schaftteil 21 ist eine Fase 22 unter einem Winkel γ von 45° vorgesehen, die zum Anfasen eines Bohrlochrandes dient. Die Bohrkrone besitzt mindestens zwei Hauptschneiden 23, 24, die in Bezug auf eine zur Bohrerlängsmittelachse 26 vertikalen Ebene 27 um einen Winkel α geneigt sind. Aus Fig. 3, die eine Draufsicht auf die Bohrerstirnfläche zeigt, ist ersichtlich, dass von den verwendeten drei Hauptschneiden 23, 24, 25 eine der Schneiden 25 verlängert ausgebildet ist und über den durch die Bohrermittellängsachse 26 bestimmten Punkt hinausragt. Die bei den anderen Hauptschneiden 24 und 23 enden jeweils vor dem durch die Bohrerlängsmittelachse 26 bestimmten Punkt. Im "Bohrzentrum" wird daher die Schnittarbeit durch die Schneide 25 beziehungsweise deren entsprechende Verlängerung geleistet. Die verwendeten drei Hauptschneiden 23, 24 und 25 sind um 120° versetzt zueinander angeordnet.

Die Schneiden 23, 24 und 25 können in einer Querschnittsansicht betrachtet linear oder gekrümmt, nämlich konkav oder konvex gekrümmt verlaufen. Konvexe und konkave Krümmungen der Hauptschneiden bewirken eine verlängerte Schneidkante. Wie eine Detailansicht des Bohrerkopfes in Fig. 2 zeigt, schließt sich an die Hauptschneide 23 mit ihrem radial äußeren Punkt 231 eine unter 45° zur Bohrerlängsachse 26 geneigte Fase 28 an, deren Breite a1 vergleichsweise klein und unterhalb von 0,5 mm gewählt werden kann, weil diese Fase 28 lediglich zur Stabilisierung des Kantenbereiches zwischen der Hauptschneide 23 und der Schleppschneide 29 dient. Beim Aufsetzen des Bohrwerkzeugs auf das Werkstück kommt diese zunächst mit dem Punkt 231 des Bohrerwerkzeugs in Kontakt. Dieses Ende der Hauptschneide 23 beschreibt bei rotierendem Werkzeug einen Bohrkreis. Die Neigung der Hauptschneiden 23, 24 und 25 bewirkt eine Kraftverteilung, die ein Ausweichen des Bohrers zur Seite hin wirkungsvoll vermeidet.

An die Fase 28 schließt sich eine Schleppschneide 29 an, die in dem an die Fase 28 angrenzenden Teil (im Querschnitt betrachtet) geradlinig ist. Diese Schleppschneide 29 kann an ihrem hinteren Ende in eine gekrümmt verlaufende weitere Schneide 30 mit einem konvexen Radius von mehr als 1 mm, beispielsweise 1,2 mm übergehen, bevor der Durchmesser D1, der durch die Bandbereiche zwischen den Spanformmulden bestimmt ist, erreicht wird.

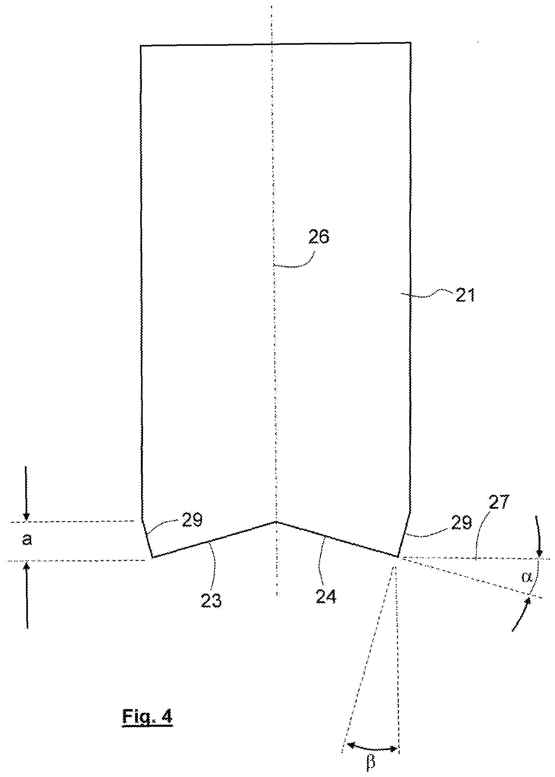

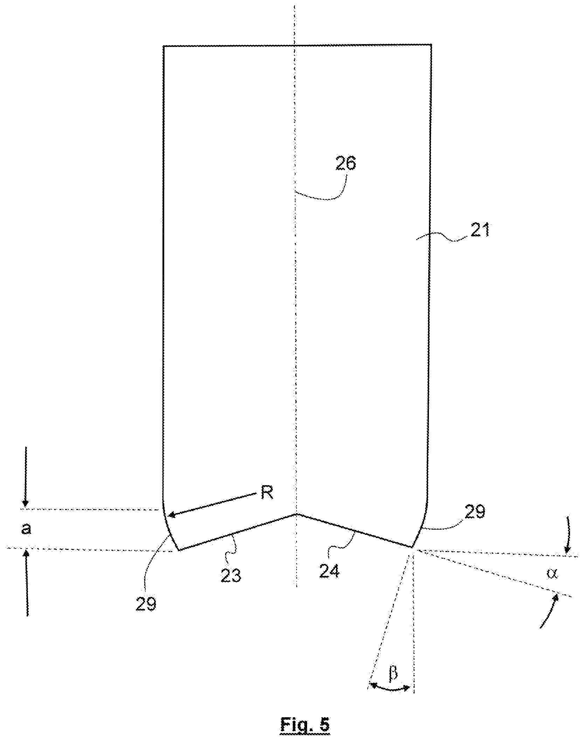

Fig. 4 zeigt Details der ersten Maßnahmen, nämlich der Neigung der Hauptschneiden 23 und 24 gegenüber einer Querebene 27 um einen Winkel α, der zwischen 3° und 20°, vorzugsweise bei 10° ± 5° liegt. Die Schleppschneide mit einer längsaxialen Erstreckung um ein Maß a von 1,5 mm bis 5 mm, beispielsweise 3 mm und deren Neigung um den Winkel β von 10° bis 25°, vorzugsweise 15° sind die Maßnahmen, um eine optimale Bohrwerkzeugzentrierung zu gewährleisten. Zusätzlich und in Fig. 5 dargestellt ist die Aufteilung der Schleppschneide 29 in einen linearen Teil sowie einen gekrümmten konvexen Teil 30 mit einem Radius R. In dem dargestellten Maß a ist der gekrümmte Schneidenanteil beispielsweise etwa 0,3 mm lang.

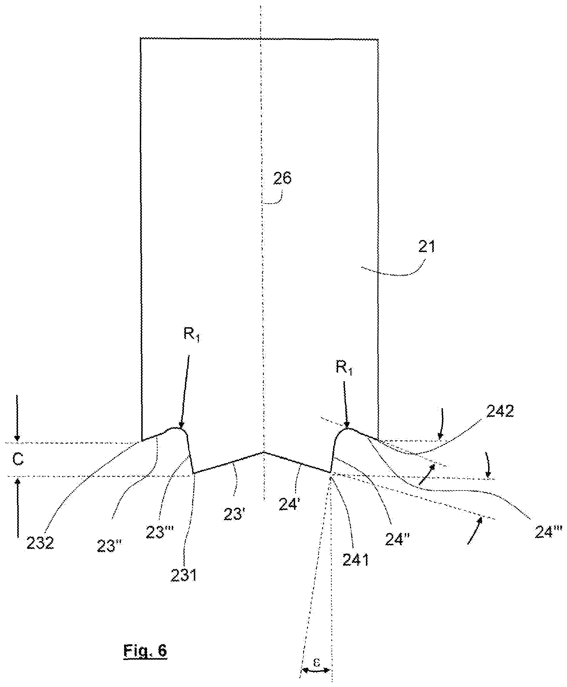

Fig. 6 zeigt einen Bohrerkörper, an dessen Bohrkopf die jeweilige Hauptschneide geteilt ist, nämlich in - bezogen auf den Bohrfortschritt - einen vorne liegenden Teil 23' und 24' sowie jeweilige hintere Teile 23" und 24", die über ein Verbindungsstück 23‴ und 24‴ miteinander verbunden sind. Beim Bohrfortschritt kommen zunächst die eingezeichneten Endpunkte 231 und 241 des Bohrwerkzeugs mit dem (nicht dargestellten) Bohrstück in Kontakt. Sobald das Bohrwerkzeug eine Bohrtiefe entsprechend dem Maß c geschnitten hat, berühren zunächst die äußeren Punkte 232 und 242 der äußeren Hauptschneiden 23" und 24" das Werkstück, so dass nunmehr die fortgesetzten Hauptschneiden 23" und 24" ihre Schnittarbeit aufnehmen. Die Neigung der Verbindungsflächen 23‴ und 24‴ um den Winkel ε liegt bei Winkeln von maximal 20°, vorzugsweise bei 10°. Die Bereiche 23" und 23‴ beziehungsweise 24" und 24‴ gehen über eine Kehle mit dem Radius R1 ineinander über. Die Flächen der Bereiche 23' und 23" sowie 24' und 24" liegen parallel versetzt zueinander.

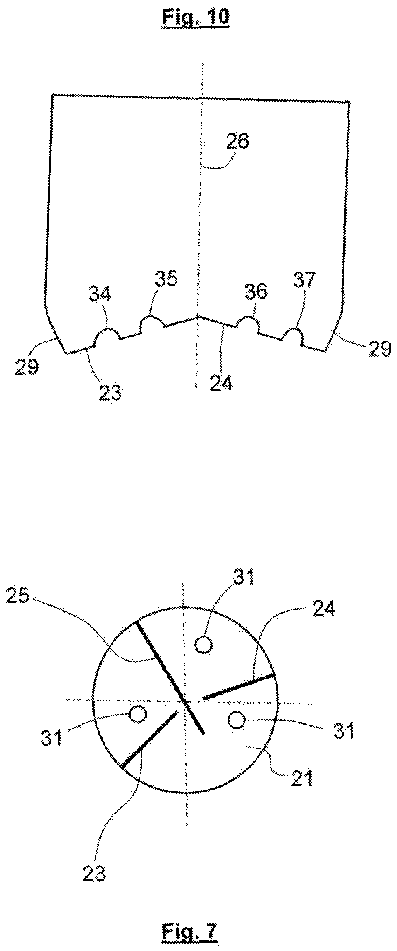

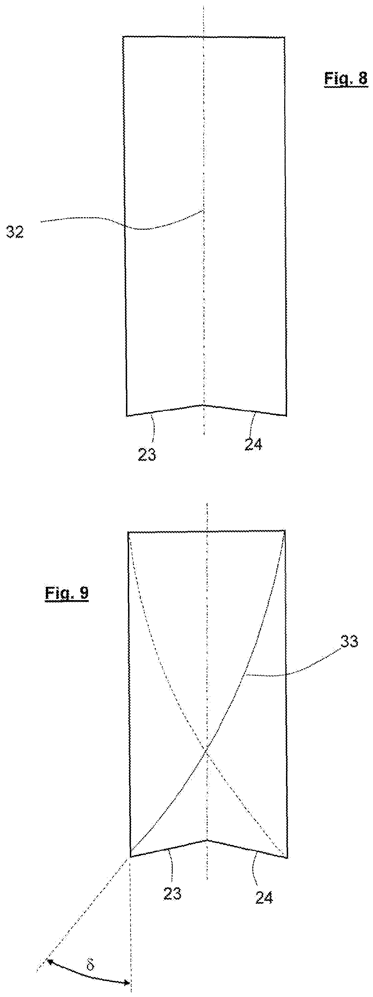

Fig. 7 zeigt die bereits in Fig. 3 dargestellten Hauptschneiden 25, 24 und 23 mit einer übermittigen Länge der Hauptschneide 25 sowie drei Bohrungen 31, über die ein Kühlmittel zur Bohrerspitze geleitet werden kann. Die Kühlmittelbohrungen liegen parallel zu den Spannuten und haben demnach entsprechend deren Formgestaltung einen wendelförmigen oder geradlinigen Verlauf, wie dies in Fig. 8 und 9 anhand der Linie 32 und 33 dargestellt ist. Im letztgenannten Fall liegt der Winkel, unter dem die Spanformnuten an der Bohrerspitze auslaufen bei δ=30°.

Eine weitere Alternative zeigt Fig. 10, in der die Hauptschneiden 23 und 24 zusätzliche Einkerbungen 34 bis 37 besitzen. Der Abstand dieser Einkerbungen von der Bohrermittellängsachse 26, das heißt konkret der Abstand der Einkerbungen 35 und 36 einerseits und 34 und 37 andererseits ist vorzugsweise unterschiedlich groß, so dass bei rotierendem Werkzeug die Einkerbungen unterschiedliche Kreisbahnen beschreiben.

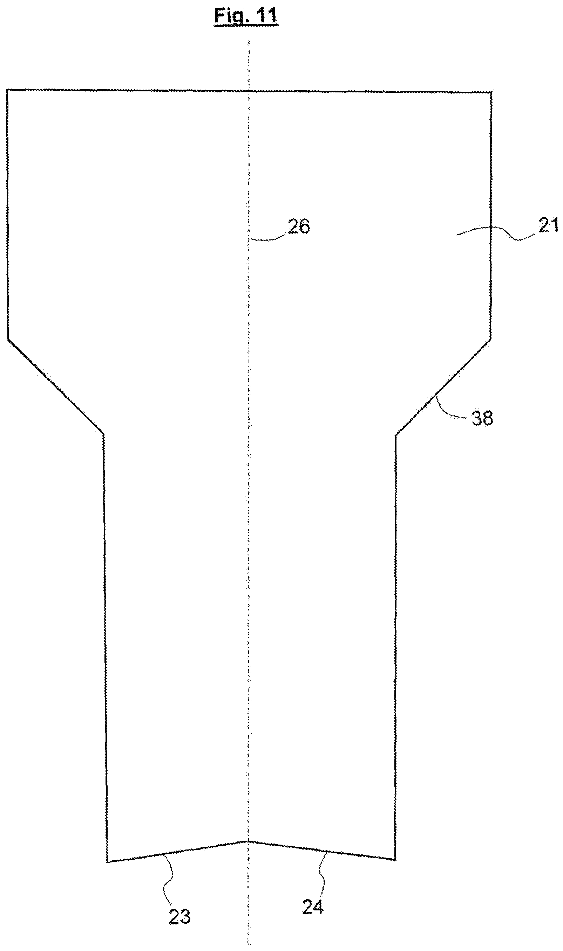

Fig. 11 zeigt exemplarisch ein Bohrwerkzeug mit einer unter 45° geneigten Fase 38.

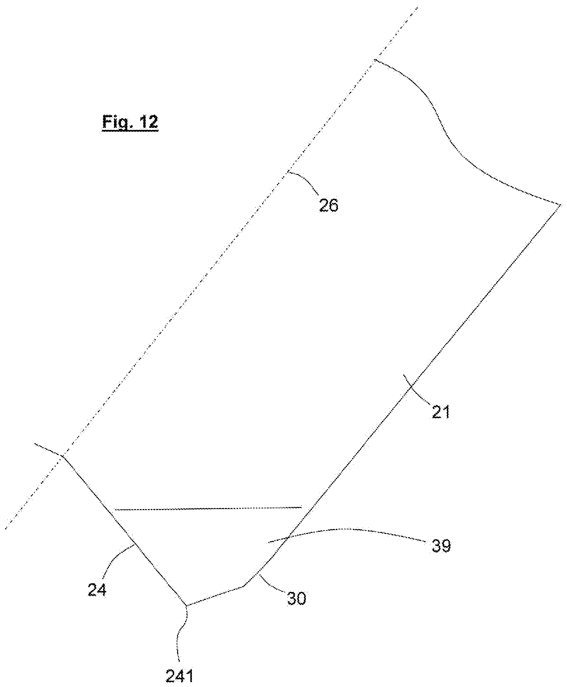

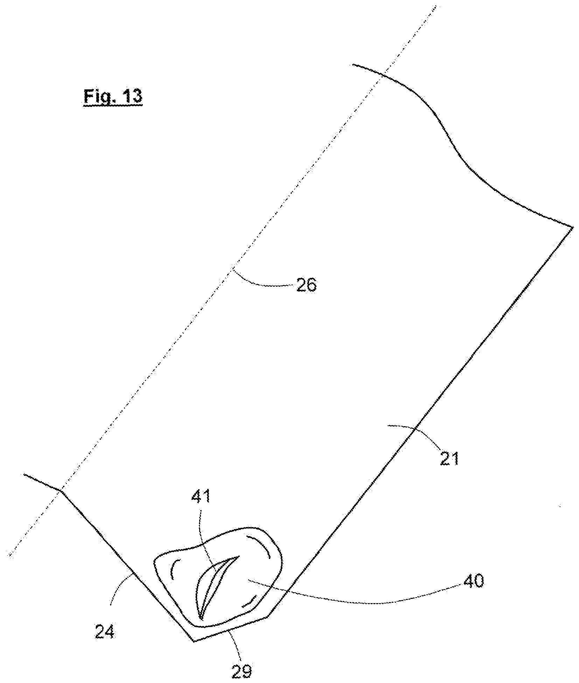

Aus Fig. 12 soll deutlich werden, dass die Spanfläche 39, welche sich an die Hauptschneide 24 anschließt, unter einem negativen Spanwinkel angeordnet ist. Wie zusätzlich aus Fig. 13 zu erkennen, ist in der Spanfläche 39 mindestens eine Spanformmulde 40 sowie mindestens ein erhabenes Spanformelement 41 vorgesehen. Das Spanformelement 41 kann eine rippenförmige Schaltung besitzen. Die Spanfläche unter einem negativen Spanwinkel in Verbindung mit der Spanformmulde 40 bewirken eine zwangsweise Krümmung des von der Hauptschneidkante 24 ablaufenden Spans, der zudem durch die erhabene Spanformelemente 41 eine Wellung in Querrichtung erfährt, was schließlich zu einem Spanbruch führt, womit die Bildung längerer Späne vermieden wird. Dies ist im Hinblick auf die Spanabfuhr über die Spannuten von erheblicher Bedeutung.

## Patentansprüche

1. Bohrwerkzeug, insbesondere Spiralbohrer für metallische Werkstoffe, Kunststoffe oder Komposit-Werkstoffe (Verbundwerkstoffe), mit einem Schaft (20) und einer Bohrkrone, die an ihrer Stirnseite mindestens zwei Hauptschneiden, vorzugsweise drei oder mehr Hauptschneiden (23, 24, 25) aufweist, die durch jeweils aneinandergrenzende Span- und Freiflächen gebildet werden, wobei sich eine der Hauptschneiden zumindest bis zur Bohrerlängsachse erstreckt, und mit gerade oder wendelförmig verlaufenden Spannuten,
**dadurch gekennzeichnet, dass**
die Hauptschneiden (23, 24, 25) einen außerhalb der Bohrerlängsachse (26) liegenden äußeren, in Bohrfortschrittsrichtung gesehen vorspringenden Schneidpunkt besitzen, von dem aus die Hauptschneiden (23, 24, 25) zur Bohrerlängsachse hin abfallen und dass sich jeweils an den radial äußersten vorspringenden Schneidpunkten (231, 241) der Hauptschneiden (23, 24, 25) eine Schleppschneide (29) anschließt, die gegenüber der parallel zur Bohrerlängsachse (26) liegenden übrigen Mantelfläche um mindestens 10° geneigt verläuft und eine längsaxiale Erstreckung (a) zwischen 1,5 mm und 5 mm besitzt.

2. Bohrwerkzeug nach Anspruch 1, **dadurch gekennzeichnet, dass** die Hauptschneiden (23, 24, 25), vorzugsweise jede der drei Hauptschneiden in einer Querschnittsansicht betrachtet linear, konvex oder konkav ausgebildet sind, vorzugsweise dergestalt, dass die lineare Hauptschneide oder eine Verbindungslinie der Eckpunkte der konkaven oder konvexen Hauptschneide unter einem Winkel 3°≤α≤20° zu einer senkrecht zur Bohrerlängsachse (26) liegenden Querebene (27) geneigt ist.

3. Bohrwerkzeug nach Anspruch 1 oder 2, **dadurch gekennzeichnet, dass** zwischen der Schleppschneide (29) und der Hauptschneide (23, 24, 25) eine Fase (28), vorzugsweise unter einem Winkel β zwischen 40° und 50°, angeordnet ist.

4. Bohrwerkzeug nach einem der Ansprüche 1 bis 3, **dadurch gekennzeichnet, dass** sich an die Schleppschneide (29) eine weitere Schneide (30) mit einem konvex gekrümmten Verlauf, vorzugsweise unter einen Krümmungsradius R zwischen 1 mm und 1,5 mm anschließt.

5. Bohrwerkzeug nach einem der Ansprüche 1 bis 4, **dadurch gekennzeichnet, dass** zwischen der Bohrkrone und dem Schaft (20) zum Einspannen des Bohrwerkzeugs eine Schneide (22, 38) zum Schneiden einer Fase angeordnet ist, vorzugsweise unter einem Winkel ε von 45°.

6. Bohrwerkzeug nach einem der Ansprüche 1 bis 5, **dadurch gekennzeichnet, dass** die Spanflächen (39) der Hauptschneiden (23, 24, 25) unter einem negativen Spanwinkel angeordnet sind.

7. Bohrwerkzeug nach einem der Ansprüche 1 bis 6, **dadurch gekennzeichnet, dass** die Spanflächen (39) der Hauptschneiden (23, 24, 25) Spanformelemente aufweisen, die als Spanformmulde (40) und/oder Spanformerhebung (41), insbesondere Rippe ausgebildet sind.

8. Bohrwerkzeug nach einem der Ansprüche 1 bis 7, **dadurch gekennzeichnet, dass** die Hauptschneiden (23, 24, 25) Einkerbungen (34 bis 37), vorzugsweise nutenförmige Ausnehmungen, aufweisen, wobei vorzugsweise ein von Hauptschneide (23) zu Hauptschneide (24) unterschiedlicher Axialabstand gewählt ist, so dass die Nuten unterschiedliche Schneidbahnen durchlaufen.

9. Bohrwerkzeug nach einem der Ansprüche 1 bis 8, **dadurch gekennzeichnet, dass** der einstückige Bohrerkörper aus einem Hartmetall oder Schnellarbeitsstahl (HSS) besteht.

10. Bohrwerkzeug nach einem der Ansprüche 1 bis 9, **dadurch gekennzeichnet, dass** eine der Hauptschneiden (25) durch die Bohrerlängsmittelachse (26) hindurchläuft und somit einen bezogen auf die Bohrerachse überschießenden Abschnitt besitzt, wohingegen die andere(n) Hauptschneide(n) (23, 24) vor der Bohrerlängsmittelachse (26) enden.

## Claims

1. Drilling tool, in particular twist drill for metallic materials, plastics or composite materials (compound materials), with a shank (20) and a drill bit which has at least two main cutting edges, preferably three or more main cutting edges (23, 24, 25), on its end face, which are formed by respective adjacent chip and flank faces, wherein one of the main cutting edges extends at least as far as the longitudinal axis of the drill, and with straight or helical flutes,
**characterized in that**
the main cutting edges (23, 24, 25) possess an outer cutting point which lies outside the longitudinal axis (26) of the drill and projects as seen in the direction of the drilling progress, from which the main cutting edges (23, 24, 25) slope towards the longitudinal axis of the drill, and **in that** the radially outermost projecting cutting points (231, 241) of the main cutting edges (23, 24, 25) are adjoined by a drag cutting edge (29) which is inclined by at least 10° relative to the remaining lateral surface lying parallel to the longitudinal axis (26) of the drill and possesses a longitudinal axial extension (a) of between 1.5 mm and 5 mm.

2. Drilling tool according to claim 1, **characterized in that** the main cutting edges (23, 24, 25), preferably each of the three main cutting edges viewed in a cross-sectional view, are formed linear, convex or concave, preferably in such a way that the linear main cutting edge or a connecting line of the corner points of the concave or convex main cutting edge is inclined at an angle of 3°< α <20° to a transverse plane (27) lying perpendicular to the longitudinal axis (26) of the drill.

3. Drilling tool according to claim 1 or 2, **characterized in that** a chamfer (28) is arranged between the drag cutting edge (29) and the main cutting edge (23, 24, 25), preferably at an angle β between 40° and 50°.

4. Drilling tool according to one of claims 1 to 3, **characterized in that** the drag cutting edge (29) is followed by a further cutting edge (30) with a convex curved course, preferably with a radius of curvature R of between 1 mm and 1.5 mm.

5. Drilling tool according to one of claims 1 to 4, **characterized in that** a cutting edge (22, 38) for cutting a chamfer is arranged between the drill bit and the shank (20) for clamping the drilling tool, preferably at an angle ε of 45°.

6. Drilling tool according to one of claims 1 to 5, **characterized in that** the chip faces (39) of the main cutting edges (23, 24, 25) are arranged at a negative chip angle.

7. Drilling tool according to one of claims 1 to 6, **characterized in that** the chip faces (39) of the main cutting edges (23, 24, 25) have chip-forming elements which are formed as a chip-forming hollow (40) and/or chip-forming elevation (41), in particular a rib.

8. Drilling tool according to one of claims 1 to 7, **characterized in that** the main cutting edges (23, 24, 25) have notches (34 to 37), preferably groove-shaped recesses, wherein preferably an axial distance is selected which is different from main cutting edge (23) to main cutting edge (24), so that the grooves run through different cutting paths.

9. Drilling tool according to one of claims 1 to 8, **characterized in that** the one-piece drill body consists of a carbide or high-speed steel (HSS).

10. Drilling tool according to one of claims 1 to 9, **characterized in that** one of the main cutting edges (25) passes through the longitudinal central axis (26) of the drill and thus possesses a section which extends beyond the drill axis, whereas the other main cutting edge(s) (23, 24) end(s) in front of the longitudinal central axis (26) of the drill.

## Revendications

1. Outil de perçage, en particulier foret hélicoïdal pour des matériaux métalliques, des matières plastiques ou des matériaux composites, avec une tige (20) et une couronne de perçage qui présente sur sa face frontale au moins deux arêtes de coupe principales, de préférence trois arêtes de coupe principales ou plus (23, 24, 25), qui sont formées par des surfaces de coupe et de dépouille respectivement contiguës, l'une des arêtes de coupe principales s'étendant au moins jusqu'à l'axe longitudinal du foret, et avec des rainures de serrage s'étendant de manière rectiligne ou hélicoïdale,
**caractérisé en ce que**
les arêtes de coupe principales (23, 24, 25) possèdent un point de coupe extérieur situé à l'extérieur de l'axe longitudinal (26) du foret et faisant saillie dans le sens de la progression du forage, à partir duquel les arêtes de coupe principales (23, 24, 25) descendent vers l'axe longitudinal du foret, et **en ce qu'**aux points de coupe en saillie radialement les plus extérieurs (231, 241) des arêtes de coupe principales (23, 24, 25) se raccorde une arête de coupe traînante (29) qui s'étend de manière inclinée d'au moins 10° par rapport à la surface d'enveloppe restante située parallèlement à l'axe longitudinal (26) du foret et qui possède une extension axiale longitudinale (a) comprise entre 1,5 mm et 5 mm.

2. Outil de perçage selon la revendication 1, **caractérisé en ce que** les arêtes principales (23, 24, 25), de préférence chacune des trois arêtes principales, vues en coupe transversale, sont linéaires, convexes ou concaves, de préférence de telle sorte que l'arête principale linéaire ou une ligne de jonction des sommets de l'arête principale concave ou convexe est inclinée d'un angle de 3°<α<20° par rapport à un plan transversal (27) perpendiculaire à l'axe longitudinal (26) du foret.

3. Outil de perçage selon la revendication 1 ou 2, **caractérisé en ce qu'**un chanfrein (28) est disposé entre l'arête de coupe traînante (29) et l'arête de coupe principale (23, 24, 25), de préférence selon un angle β compris entre 40° et 50°.

4. Outil de perçage selon l'une des revendications 1 à 3, **caractérisé en ce que** l'arête de coupe traînante (29) est suivie d'une autre arête de coupe (30) présentant un tracé incurvé convexe , de préférence sous un rayon de courbure R compris entre 1 mm et 1,5 mm.

5. Outil de perçage selon l'une des revendications 1 à 4, **caractérisé en ce qu'**une arête de coupe (22, 38) est disposée entre la couronne de forage et la tige (20) pour le serrage de l'outil de forage, pour découper un chanfrein, de préférence sous un angle ε de 45°.

6. Outil de perçage selon l'une des revendications 1 à 5, **caractérisé en ce que** les faces de coupe (39) des arêtes de coupe principales (23, 24, 25) sont disposées sous un angle de coupe négatif.

7. Outil de perçage selon l'une des revendications 1 à 6, **caractérisé en ce que** les faces de coupe (39) des arêtes de coupe principales (23, 24, 25) présentent des éléments de formation de copeaux qui sont réalisés sous la forme d'un creux de formation de copeaux (40) et/ou d'une élévation de formation de copeaux (41), en particulier d'une nervure.

8. Outil de perçage selon l'une des revendications 1 à 7, **caractérisé en ce que** les arêtes de coupe principales (23, 24, 25) présentent des encoches (34 à 37), de préférence des évidements en forme de rainures, un écartement axial différent d'une arête de coupe principale (23) à l'autre (24) étant de préférence choisi, de sorte que les rainures traversent différentes trajectoires de coupe.

9. Outil de perçage selon l'une des revendications 1 à 8, **caractérisé en ce que** le corps de foret monobloc est constitué d'un métal dur ou d'un acier à coupe rapide (HSS).

10. Outil de perçage selon l'une des revendications 1 à 9, **caractérisé en ce que** l'une des arêtes principales (25) passe par l'axe longitudinal médian (26) du foret et possède ainsi une partie en saillie par rapport à l'axe du foret, tandis que la ou les autres arêtes principales (23, 24) se terminent avant l'axe longitudinal médian (26) du foret.
